(19) Europäisches Patentamt
European Patent Office
Office européen des brevets

(11) **EP 0 648 169 B1**

(12) **EUROPÄISCHE PATENTSCHRIFT**

(45) Veröffentlichungstag und Bekanntmachung des Hinweises auf die Patenterteilung:
**08.05.1996 Patentblatt 1996/19**

(21) Anmeldenummer: **93912616.5**

(22) Anmeldetag: **24.06.1993**

(51) Int. Cl.$^6$: **B60T 8/80**

(86) Internationale Anmeldenummer: **PCT/DE93/00549**

(87) Internationale Veröffentlichungsnummer:
**WO 94/01310 (20.01.1994 Gazette 1994/03)**

(54) **Antriebsschlupfregelverfahren**

Drive Slip Control Method

Procédé d'antipatinage à l'acceleration

(84) Benannte Vertragsstaaten:
**DE FR GB**

(30) Priorität: **06.07.1992 DE 4222159**

(43) Veröffentlichungstag der Anmeldung:
**19.04.1995 Patentblatt 1995/16**

(73) Patentinhaber: **ROBERT BOSCH GMBH**
**70442 Stuttgart (DE)**

(72) Erfinder:
• **SCHMITT, Johannes**
  **D-1706 Markgroeningen (DE)**
• **BURG, Andreas**
  **D-7679 Asperg (DE)**

(56) Entgegenhaltungen:
**EP-A- 0 510 466**      **GB-A- 2 165 013**
**GB-A- 2 248 661**      **US-A- 4 763 960**
**US-A- 4 783 126**

## Beschreibung

### Stand der Technik

Es sind Antriebsschlupfregelsysteme bekannt, die beim Durchdrehen oder zu erwartendem Durchdrehen der angetriebenen Räder diese bremsen oder das Antriebsmoment des Motors reduzieren um ein Durchdrehen zu vermeiden. Es ist bei Antiblockierregelsystemen und Antriebsschlupfregelsystemen auch bekannt, daß fälschlicherweise die Regelung ausgelöst werden kann, wenn die Reifendurchmesser z.B. wegen Druckunterschieden voneinander abweichen und somit ein Schlupf zwischen einer Radgeschwindigkeit und der Fahrzeuggeschwindigkeit vorgetäuscht wird.

Beim Stand der Technik werden die Raddurchmesser rechnerisch aneinander angeglichen, um die Fehlauslösung zu vermeiden.

### Vorteile der Erfindung

Die Erfindung geht gegenüber dem Stand der Technik einen anderen Weg zur Lösung des Problems, indem sie die Schlupfschwellen hochsetzt. Diese Lösung ist einfacher zu realisieren. Wird im ASR eine Lösung eingesetzt, bei der die Schlupfschwelle ausgehend von einem hohen Anfangswert kontinuierlich bis zu einer niedrigen Schwelle verkleinert wird, wie dies in der älteren Patentanmeldung DE-A-4 032 506 (Lucas) beschrieben ist, so kann man die Erfindung hier so realisieren, daß man die Schlupfschwelle bei erkannter Abweichung auf den hohen Schwellwert setzt bzw. sie dort festhält.

Die weiteren Unteransprüche beschreiben die Bedingungen, bei denen die Überwachung der Reifentoleranzen durchgeführt wird, und wie man sie durchführen kann.

### Figurenbeschreibung

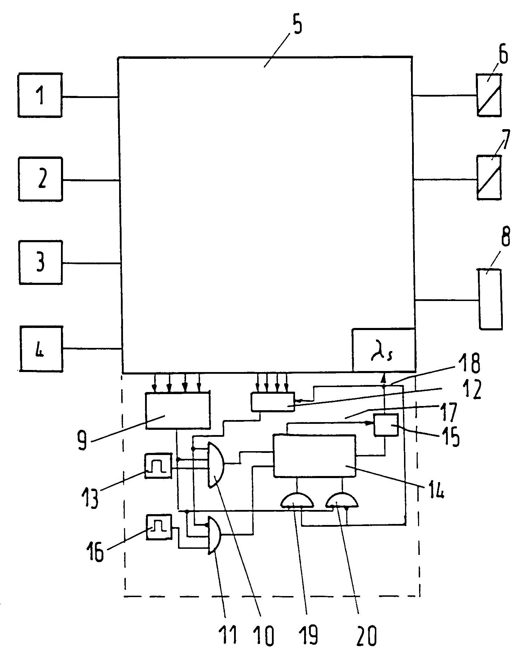

Anhand der Zeichnung wird ein Ausführungsbeispiel der Erfindung näher erläutert. Dort sind mit 1 und 2 die Radgeschwindigkeitssensoren der nicht angetriebenen Räder (Vorderräder) und mit 3 und 4 die der angetriebenen Räder bezeichnet. 5 ist ein ASR-Steuergerät, das die Sensorsignale empfängt und im Falle eines drohenden Durchdrehens Steuersignale für den angetriebenen Rädern zugeordnete Bremsdrucksteuerventile 6 und 7 und/oder für ein Glied 8 zur Beeinflussung z.B. der Drosselklappe abgibt.

Im Steuergerät 5 wird aus den Geschwindigkeitssignalen der nicht angetriebenen Räder ein Referenzsignal erzeugt, mit dem die Geschwindigkeitssignale der angetriebenen Räder verglichen werden. Übersteigt das Radgeschwindigkeitssignal das Referenzsignal um einen vorgegebenen Schlupfwert $\lambda_s$, so werden z.B. die angetriebenen Räder gebremst. Der Schlupfwert $\lambda_s$ (Schlupfschwelle) ist zwischen einem oberen und unteren Grenzwert $\lambda_O$ bzw. $\lambda_U$ variierbar, wobei zu Regelbeginn vom oberen Grenzwert $\lambda_O$ ausgegangen und der Schlupfwert kontinuierlich bis $\lambda_U$ abgesenkt wird, wenn und solange wenigstens ein Rad instabil ist. Danach wird ausgehend von dem erreichten Schlupfwert $\lambda_X$ der Schlupfwert kontinuierlich bis $\lambda_O$ angehoben, solange keines der Räder instabil ist. Danach wird ausgehend von dem jeweils erreichten Schlupfwert $\lambda_X$ der Schlupfwert wieder angehoben oder abgesenkt, abhängig davon, ob wenigstens ein Rad instabil bzw. beide stabil sind.

Gemäß der Erfindung soll nun die Schlupfschwelle $\lambda_s$ auf den hohen Schlupfwert gesetzt werden, bzw. dort gehalten werden, wenn erkannt wird, daß die Raddurchmesser voneinander abweichen und damit die Gefahr besteht, daß es zu einer falschen Regelungsauslösung kommen kann.

Die Überprüfung auf unzulässige Abweichung wird nur durchgeführt, wenn in einem Block 9 festgestellt wird, daß

- kein Bremslichtsignal vorhanden ist BLS
- weder eine ABS, ASR noch sonstige Regelung des Bremsdrucks oder des Motormoments läuft
- nicht stark Gas gegeben wird DKV < $DKV_{min}$ und
- keine Kurve durchfahren wird | VNAL - VNAR | < VMNA (mittlere Geschwindigkeit der nicht angetriebenen Räder)

Zusätzlich kann noch die Bedingung

- Fahrgeschwindigkeit > z.B. 25 km/h und
- keine starke Motordrehzahländerungen ($\dot{M}_{mot}$ > 2250 U/min/s)

berücksichtigt werden.

Sind diese Bedingungen erfüllt, so gibt der Block 9 ein Signal zu Und-Gattern 10 und 11 ab.

In einem Block 12 wird durch Überprüfen der folgenden Bedingungen festgestellt, ob eine Abweichung vorliegt, die eine falsche Regelungsauslösung bewirken könnte.

Eine unzulässige Abweichung wird als gegeben festgestellt, wenn entweder

1. die mittleren Geschwindigkeiten der Räder der beiden Achsen um einen vorgegebenen Prozentsatz x der mittleren Geschwindigkeit der nicht angetriebenen Räder voneinander abweichen (VMAN - VMNA) > x VMNA

oder

2. der Betrag der Differenz der angetriebenen Räder größer als ein Prozentsatz x der mittleren Geschwindigkeit der nicht angetriebenen Räder ist

| VHL - VHR | > x VMNA

und zusätzlich entweder

$$(VHL - VHR) > 0 \text{ und}$$

$$(VNAR - VHR) < x \text{ VMNA oder}$$

$$(VHL - VHR) < 0 \text{ und}$$

$$(VNAL - VHL) < x \text{ VMNA ist}$$

Trifft eine der beiden Bedingungen 1. oder 2. zu, so gibt der Block 12 ein Signal ab; liegt gleichzeitig ein Signal von Block 9 am Und-Gatter 10 an, so läßt das Und-Gatter 10 Impulse eines Impulsgebers 13 zu einem Zähler 14 durch, der ausgehend von einem Anfangswert (z.B. 0) hochzählt. Erreicht er nach einer Zeit eine vorgegebene Zählstellung (z.B. 1200), so gibt er ein Signal ab und setzt ein bistabiles Glied 15 in seine zweite Stellung. Das dann erzeugte Ausgangssignal dieses Glieds 15 zwingt nun die Schlupfschwelle $\lambda_s$ auf den hohen Schlupfwert.

Ist die Bedingung 1. oder 2. nicht mehr erfüllt, so wird anstelle des Und-Gatters 10 das Und-Gatter 11 für die Impulse eines Impulsgebers 16 durchlässig. Diese Impulse zählen den Zähler 14 zurück. Erreicht er die Ausgangsstellung, so wird das bistabile Glied 15 rückgesetzt (Leitung 17).

Der Wert für x kann unterschiedlich sein, je nachdem, ob das bistabile Glied 15 ein Signal abgibt (x = 0,015) oder nicht ( x = 0,020 (Leitung 18).

Wenn das Ausgangssignal des Blocks 9 verschwindet und auch Block 15 kein Ausgangssignal abgibt, dann wird der Zähler 14 in die Ausgangsstellung rückgestellt. Verschwindet das Ausgangssignal des Blocks 9 bei vorhandenem Ausgangssignal des bistabilen Glieds 15 dann wird der Zähler in die vorgegebene Zählerstellung (z.B. 1200) gestellt. Dies bewirken Und-Gatter 19 und 20.

## Patentansprüche

1. Verfahren zum Betrieb eines Antriebsschlupfregelsystems, bei dem bei Überschreiten einer vorgegebenen Schlupfschwelle durch den Antriebsschlupf wenigstens eines angetriebenen Rads das Rad gebremst und/oder das Antriebsmoment des Motors reduziert wird und bei dem die angetriebenen Räder auf Abweichungen der Reifendurchmesser überwacht und bei Erkennen einer unzulässigen Abweichung ein Schaltsignal erzeugt wird, dadurch gekennzeichnet, daß das Schaltsignal eine Erhöhung der vorgegebenen Schlupfschwelle bewirkt.

2. Verfahren nach Anspruch 1, bei dem die vorgegebene Schlupfschwelle während der Regelung ausgehend von einer hohen Schlupfschwelle erniedrigt wird, dadurch gekennzeichnet, daß das Schaltsignal die Schlupfschwelle auf die hohe Schlupfschwelle setzt oder sie dort festhält.

3. Verfahren nach Anspruch 1 oder 2, dadurch gekennzeichnet, daß die Überwachung auf unzulässige Abweichung in Zeiträumen ohne Bremsung, bei nur geringem Motormoment, ohne Kurvenfahrt und ohne Regelung des Bremsdrucks und /oder des Motormoments durchgefuhrt wird.

4. Verfahren nach einem der Ansprüche 1 bis 3, dadurch gekennzeichnet, daß auf unzulässige Abweichung erkannt wird, wenn die mittlere Geschwindigkeit der angetriebenen Räder um wenigstens einen vorgegebenen Wert und eine vorgegebene Zeitspanne lang von der mittleren Geschwindigkeit der nicht angetriebenen Räder abweicht.

5. Verfahren nach einem der Ansprüche 1 bis 3, dadurch gekennzeichnet, daß auf unzulässige Abweichung erkannt wird, wenn der Betrag der Differenz der Geschwindigkeiten der angetriebenen Räder größer als ein Prozentsatz der mittleren Radgeschwindigkeit der nicht angetriebenen Räder ist und entweder die Differenz der Geschwindigkeiten des angetriebenen Hinterrads der einen Fahrzeugseite und des angetriebenen Hinterrads der anderen Fahrzeugseite größer 0 ist und die Differenz der Geschwindigkeiten des nicht angetriebenen Rads der anderen Fahrzeugseite und des angetriebenen Rads der anderen Fahrzeugseite kleiner als ein Prozentsatz der mittleren Geschwindigkeit der nicht angetriebenen Fahrzeugräder ist oder die Differenz der Geschwindigkeiten des angetriebenen Hinterrads der einen Fahrzeugseite und des angetriebenen Hinterrads kleiner oder gleich 0 ist und die Differenz der Geschwindigkeiten des nicht angetriebenen Rads der einen Fahrzeugseite und des angetriebenen Rads der einen Fahrzeugseite kleiner als ein Prozentsatz der mittleren Geschwindigkeit der nicht angetriebenen Räder ist.

6. Verfahren nach einem der Ansprüche 4 oder 5, dadurch gekennzeichnet, daß ein Zähler vorgesehen ist, der bei Überschreiten des vorgegebenen Differenzwerts ausgehend von einem Abfangswert inkrementiert und sonst dekrementiert wird und nach Erreichen eines vorgegebenen Zählerstands das Schaltsignal erzeugt.

7. Verfahren nach Anspruch 6, dadurch gekennzeichnet, daß das Schaltsignal nach Erreichen des vorgegebenen Zählerstands erhalten bleibt bis durch eine nachfolgende Dekrementierung der Anfangswert erreicht ist.

## Claims

1. Method of operating a traction control system in which, when a predetermined slip threshold is exceeded by the tractive slip of at least one driven wheel, the wheel is braked and/or the driving torque of the engine is reduced, and in which the driven wheels are monitored for differences in the diameters of the tyres and a switching signal is generated when an impermissible difference is detected, characterized in that the switching signal raises the predetermined slip threshold.

2. Method according to Claim 1, in which the predetermined slip threshold is lowered during control, starting from a high slip threshold, characterized in that the switching signal sets the slip threshold to the high slip threshold or holds it there.

3. Method according to Claim 1 or 2, characterized in that the monitoring for an impermissible difference is performed in periods without braking, at a low engine torque, in the absence of cornering and in the absence of control of the brake pressure and/or the engine torque.

4. Method according to one of Claims 1 to 3, characterized in that an impermissible difference is detected if the mean speed of the driven wheels differs by at least a predetermined value and for a predetermined time from the mean speed of the non-driven wheels.

5. Method according to one of Claims 1 to 3, characterized in that an impermissible difference is detected if the magnitude of the difference between the speeds of the driven wheels is larger than a percentage of the mean wheel speed of the non-driven wheels and either the difference between the speed of the driven rear wheel on one side of the vehicle and that of the driven rear wheel on the other side of the vehicle is greater than 0 and the difference between the speed of the non-driven wheel on the other side of the vehicle and that of the driven wheel on the other side of the vehicle is smaller than a percentage of the mean speed of the non-driven vehicle wheels or the difference between the speed of the driven rear wheel on one side of the vehicle and that of the driven rear wheel is smaller than or equal to 0 and the difference between the speed of the non-driven wheel on one side of the vehicle and that of the driven wheel on one side of the vehicle is smaller than a percentage of the mean speed of the non-driven wheels.

6. Method according to either of Claims 4 or 5, characterized in that a counter is provided which is incremented, starting from an initial value, when the predetermined difference is exceeded and otherwise is decremented and, after reaching a predetermined count, produces the switching signal.

7. Method according to Claim 6, characterized in that the switching signal after the predetermined count is reached is maintained until the initial value is reached by a subsequent decrementation.

**Revendications**

1. Procédé de mise en oeuvre d'un système de régulation antipatinage selon lequel, en cas de dépassement d'un seuil de glissement prédéterminé par le patinage à l'entraînement d'au moins une roue motrice, on freine la roue et/ou on réduit le couple du moteur, on surveille les roues motrices par rapport aux déviations de diamètres de roues et en cas de détection d'une déviation non autorisée, on émet un signal de commutation, procédé caractérisé en ce que le signal de commutation augmente le seuil de glisse-ment prédéterminé.

2. Procédé selon la revendication 1, selon lequel on abaisse le seuil de glissement prédéterminé, pendant la régulation, en partant d'un seuil de glissement haut, caractérisé en ce que le signal de commutation fixe ou bloque le seuil de glissement au seuil de glissement haut.

3. Procédé selon la revendication 1 ou 2, caractérisé en ce qu'on surveille la déviation non autorisée dans les intervalles de temps sans freinage, pour un faible couple moteur, sans trajectoire courbe et sans régulation de la pression de frein et/ou du couple moteur.

4. Procédé selon l'une des revendications 1 à 3, caractérisé en ce qu'on détecte une déviation non autorisée si la vitesse moyenne des roues motrices dévie au moins d'une valeur prédéterninée et pendant une durée prédéterminée par rapport à la vitesse moyenne des roues non motrices.

5. Procédé selon l'une des revendications 1 à 3, caractérisé en ce qu'on détecte une déviation non autorisée si l'amplitude de la différence des vitesses des roues motrices dépasse d'un pourcentage la vitesse de roue moyenne des roues non entraînées et si la différence des vitesses de la roue arrière entraînée d'un côté du véhicule et de la roue arrière entraînée de l'autre côté du véhicule est supérieure à 0 et si la différence des vitesses de la roue non entraînée de l'autre côté du véhicule et de la roue entraînée de l'autre côté du véhicule est inférieure à un pourcentage de la vitesse moyenne des roues non entraînées du véhicule ou si la différence des vitesses de la roue arrière entraînée d'un côté du véhicule et de la roue arrière entraînée est inférieure ou égale à 0 et si la différence des vitesses de la roue non entraînée d'un côté du véhicule et de la roue entraînée d'un côté du véhicule est inférieure à un pourcentage de la vitesse moyenne des roues non entraînées.

6. Procédé selon l'une des revendications 4 ou 5, caractérisé en ce qu'on utilise un compteur qui lors du dépassement de la valeur prédéterminée de la différence incrémente à partir d'une valeur initiale et au cas contraire décrémente, et crée le signal de commutation lorsqu'il atteint un état de comptage prédéterminé.

7. Procédé selon la revendication 6, caractérisé en ce que le signal de commutation reste maintenu après que l'on ait atteint un état de comptage prédéterminé, jusqu'à une décrémentation suivante de la valeur initiale.